(19) Europäisches Patentamt
European Patent Office
Office européen des brevets

(11) EP 2 789 041 B1

(12) # EUROPÄISCHE PATENTSCHRIFT

(45) Veröffentlichungstag und Bekanntmachung des Hinweises auf die Patenterteilung:
**12.07.2017 Patentblatt 2017/28**

(21) Anmeldenummer: **12798674.3**

(22) Anmeldetag: **29.11.2012**

(51) Int Cl.:
***H01M 10/04*** (2006.01) ***H01M 10/0525*** (2010.01)
***H01M 10/0567*** (2010.01) ***H01M 4/505*** (2010.01)
***H01M 4/131*** (2010.01) ***H01M 4/133*** (2010.01)
***H01M 4/587*** (2010.01) ***C07F 7/10*** (2006.01)

(86) Internationale Anmeldenummer:
**PCT/EP2012/073988**

(87) Internationale Veröffentlichungsnummer:
**WO 2013/083475 (13.06.2013 Gazette 2013/24)**

(54) **MISCHUNGEN UND IHRE VERWENDUNG IN LITHIUM-IONEN-BATTERIEN**
ELECTROCHEMICAL CELLS AND THEIR USE
CELLULES ÉLECTROCHIMIQUES ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2011 EP 11192580**

(43) Veröffentlichungstag der Anmeldung:
**15.10.2014 Patentblatt 2014/42**

(73) Patentinhaber: **BASF SE**
**67056 Ludwigshafen am Rhein (DE)**

(72) Erfinder:
- **SCHRÖDLE, Simon**
**67059 Ludwigshafen (DE)**
- **LAMPERT, Jordan, Keith**
**67063 Ludwigshafen (DE)**
- **SCHULZ-DOBRICK, Martin**
**68165 Mannheim (DE)**
- **MALKOWSKY, Itamar, Michael**
**67346 Speyer (DE)**
- **GARSUCH, Arnd**
**67063 Ludwigshafen (DE)**
- **LEITNER, Klaus**
**67063 Ludwigshafen (DE)**
- **KUTZKI, Olaf**
**68163 Mannheim (DE)**

(74) Vertreter: **BASF IP Association**
**BASF SE**
**G-FLP-C006**
**67056 Ludwigshafen (DE)**

(56) Entgegenhaltungen:
**US-B1- 6 235 431**

- **ZHANG ET AL: "A review on electrolyte additives for lithium-ion batteries", JOURNAL OF POWER SOURCES, ELSEVIER SA, CH, Bd. 162, Nr. 2, 22. November 2006 (2006-11-22), Seiten 1379-1394, XP027938606, ISSN: 0378-7753 [gefunden am 2006-11-22]**
- **AURBACH D ET AL: "Studies of cycling behavior, ageing, and interfacial reactions of LiNi0.5Mn1.5O4 and carbon electrodes for lithium-ion 5-V cells", JOURNAL OF POWER SOURCES, ELSEVIER SA, CH, Bd. 162, Nr. 2, 22. November 2006 (2006-11-22), Seiten 780-789, XP027938520, ISSN: 0378-7753 [gefunden am 2006-11-22]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Mischungen, enthaltend

(A) mindestens ein aprotisches organisches Lösungsmittel oder eine Mischung von aprotischen Lösungsmitteln, das oder die bei Zimmertemperatur flüssig ist,
(B) mindestens eine Verbindung der allgemeinen Formen (I a), (I b), (II a) oder (II b),

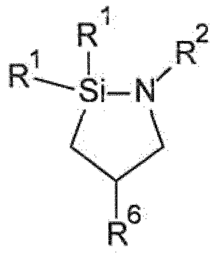

(I a)

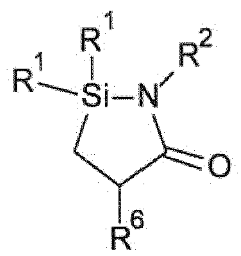

(I b)

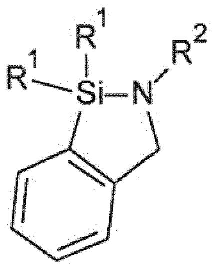

(II a)

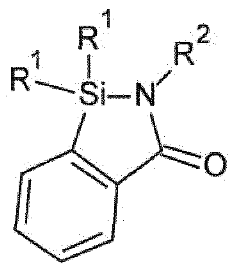

(II b)

wobei die Variablen wie folgt definiert sind:

$R^1$ verschieden oder gleich und gewählt aus $C_1$-$C_4$-Alkyl, $C_1$-$C_4$-Alkoxy und Phenyl,

$R^2$ gewählt aus $C_1$-$C_4$-Alkyl, $COOCH_3$, $COOC_2H_5$, $C_2$-$C_3$-Alkenyl und Phenyl,

(C) im Bereich von null bis 30 ppm Wasser,
(D) gegebenenfalls mindestens ein weiteres Additiv,
(E) gegebenenfalls mindestens ein Lithiumsalz.

Seit Jahren sucht man nach Methoden, elektrische Energie effizient zu speichern. Eine derartige Speicherung eröffnete die Möglichkeit, elektrische Energie dann zu erzeugen, wenn es vorteilhaft ist, und dann zu nutzen, wenn es erforderlich ist.

Akkumulatoren, beispielsweise Bleiakkumulatoren und Nickel-Cadmium-Akkumulatoren, sind bereits seit vielen Jahrzehnten bekannt. Nachteilig bei den bekannten Bleiakkumulatoren und Nickel-Cadmium-Akkumulatoren ist jedoch die verhältnismäßig geringe Energiedichte und der Memory-Effekt, der die Wiederaufladbarkeit und somit die Lebensdauer von Bleiakkumulatoren und Nickel-Cadmium-Akkumulatoren senkt.

Als Alternative werden Lithium-Ionen-Akkumulatoren genutzt, die vielfach auch als Lithium-Ionen-Batterien bezeichnet werden. Mit ihnen lassen sich höhere Energiedichten erzielen als mit Akkumulatoren, die auf Basis von Blei oder verhältnismäßig edlen Schwermetallen arbeiten.

Da in vielen Lithium-Ionen-Batterien metallisches Lithium bzw. Lithium der Oxidationsstufe 0 eingesetzt wird oder intermediär entsteht, sind sie wasserempfindlich. Wasserempfindlich bei Dauerbetrieb sind weiterhin die eingesetzten Elektrolyte, beispielsweise $LiPF_6$. Als Lösungsmittel für die in Lithium-Ionen-Batterien eingesetzten Lithiumsalze kommt daher Wasser nicht in Frage. Stattdessen werden als Lösungsmittel mit hinreichender Polarität organische Carbonate, Ether und Ester eingesetzt. Es wird in der Literatur daher empfohlen, wasserfreie Lösungsmittel für die

Elektrolyten einzusetzen, s. beispielsweise WO 2007/049888.

Wasserfreie Lösungsmittel sind jedoch umständlich herzustellen und zu verarbeiten. Zahlreiche für Lithium-Ionen-Batterien an sich geeignete Lösungsmittel enthalten Anteile von Wasser in der Größenordnung von 100 ppm und mehr. Derart hohe Anteile an Wasser sind jedoch für die meisten Lithium-Ionen-Batterien nicht tragbar. Die Aufgabe, für Lithium-Ionen-Batterien hinreichend geeignete Lösungsmittel bereit zu stellen, wird dadurch verkompliziert, dass die meisten modernen Lithium-Ionen-Batterien nicht ein einzelnes Lösungsmittel enthalten, sondern Lö sungsmittelgemische, von denen einige ein sehr unterschiedliches Reaktionsvermögen gegenüber Trocknungsmitteln aufweisen.

In US 6,235,431 wird vorgeschlagen, Verbindungen mit Si-N-Bindungen als Additiv zum Lösungsmittel(gemisch) in einer Lithium-Ionen-Batterie hinzuzugeben. Diese Verbindung reagiert mit Wasser und schützt dadurch sowohl das Leitsalz als auch das Kathodenmaterial. Insbesondere werden in US 6,235,431 Organosilazane und Organodisilazane empfohlen, weiterhin Hexamethylcyclotrisilazan. Es wurde jedoch beobachtet, dass derartige Verbindungen mit Wasser unter Bildung von Ammoniak oder flüchtigen organischen Aminen reagieren kann, die bei längerem Betrieb einer Lithium-Ionen-Batterie diese zu schädigen vermögen.

Es bestand also die Aufgabe, Medien bereit zu stellen, die sich für Elektrolyte in Lithium-Ionen-Batterien eignen. Es bestand weiterhin die Aufgabe, ein Verfahren zur Herstellung von Medien bereit zu stellen, die sich für Lithium-Ionen-Batterien eignen. Schließlich bestand die Aufgabe, Lithium-Ionen-Batterien mit guten Gebrauchseigenschaften bereit zu stellen.

Dementsprechend wurden die eingangs definierten Mischungen gefunden.

Im Rahmen der vorliegenden Erfindung werden Lithium-Ionen-Akkumulatoren auch als Lithium-Ionen-Batterien bezeichnet.

Erfindungsgemäße Mischungen sind unter Normalbedingungen (1 bar, 0°C) flüssig, bevorzugt auch bei 1 bar und -15°C.

Erfindungsgemäße Mischungen enthalten mindestens ein aprotisches organisches Lösungsmittel (A), bevorzugt mindestens zwei aprotische organische Lösungsmittel (A) und besonders bevorzugt mindestens drei aprotische organische Lösungsmittel (A).

In einer Ausführungsform der vorliegenden Erfindung können erfindungsgemäße Mischungen bis zu zehn verschiedene aprotische organische Lösungsmittel (A) enthalten.

Dabei werden unter aprotischen organischen Lösungsmitteln im Rahmen der vorliegenden Erfindung nicht nur solche aprotischen organischen Lösungsmittel (A) verstanden, die bei Zimmertemperatur flüssig sind.

Im Rahmen der vorliegenden Erfindung gelten auch solche aprotischen organischen Verbindungen als umfasst, die als reine Verbindung bei Zimmertemperatur fest sind, die aber im Gemisch mit den übrigen aprotischen organischen Lösungsmitteln (A) flüssig sind. Beispielhaft sei Ethylencarbonat genannt, das in Mischung mit Diethylcarbonat und/oder Methylethylcarbonat in weiten Grenzen flüssig ist, als Reinstoff aber einen Schmelzpunkt von etwa 36°C aufweist.

In einer Ausführungsform der vorliegenden Erfindung wählt man aprotische Lösungsmittel (A) aus

(a) cyclischen und nicht-cyclischen organischen Carbonaten,
(b) Di-$C_1$-$C_{10}$-alkylethern,
(c) Di-$C_1$-$C_4$-Alkyl-$C_2$-$C_6$-alkylenethern,
(d) cyclischen Ethern,
(e) cyclischen und acyclischen Acetalen und Ketalen,
(f) Orthocarbonsäureestern und
(g) cyclischen und nicht-cyclischen Carbonsäureestern.

Bevorzugt sind cyclische und nicht-cyclische organische Carbonate (a), Di-$C_1$-$C_{10}$-alkylether (b), Di-$C_1$-$C_4$-Alkyl-$C_2$-$C_6$-alkylenether (c) und cyclische und acyclische Acetale und Ketale (e).

Beispiele für bevorzugte nicht-cyclische organische Carbonate (a) sind Di- $C_1$-$C_4$-Alkylcarbonate, in denen $C_1$-$C_4$-Alkyl gleich oder verschieden sein können und gewählt sind aus $C_1$-$C_4$-Alkyl, beispielsweise Methyl, Ethyl, n-Propyl, iso-Propyl, n-Butyl, iso-Butyl, sec.-Butyl, bevorzugt Methyl oder Ethyl.

Besonders bevorzugte nicht-cyclische organische Carbonate (a) sind Dimethylcarbonat, Diethylcarbonat und Methylethylcarbonat und Mischungen davon, d.h. Mischungen von mindestens zwei der genannten Verbindungen Dimethylcarbonat, Diethylcarbonat und Methylethylcarbonat.

Beispiele für bevorzugte cyclische organische Carbonate (a) sind solche der allgemeinen Formel (III a) und (III b)

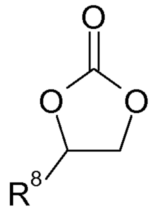 (III a) 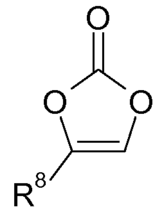 (III b)

in denen $R^8$ gewählt ist aus $C_1$-$C_4$-Alkyl, beispielsweise Methyl, Ethyl, n-Propyl, iso-Propyl, n-Butyl, iso-Butyl, sec.-Butyl, bevorzugt Methyl,
Fluor, ein- oder mehrfach fluoriertes $C_1$-$C_4$-Alkyl, beispielsweise $CF_3$ oder n-$C_4H_9$, und insbesondere Wasserstoff.

Weiteres bevorzugtes cyclisches organisches Carbonat (a) ist Difluorethylencarbonat,

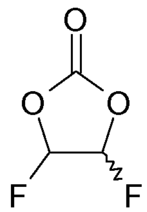

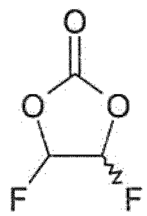

Beispiele für bevorzugte Di-$C_1$-$C_{10}$-alkylether (b) sind Diethylether, Diisopropylether und Di-n-Butylether.

Beispiele für Di-C1_$C_4$-Alkyl-$C_2$-$C_6$-alkylenether (c) sind 1,2-Dimethoxyethan, 1,2-Diethoxyethan, Diethylenglykoldimethylether, Triethylenglykoldimethylether, Tetraethylenglykoldimethylether und Diethylenglykoldiethylether.

Beispiele für cyclische Ether (d) sind 1,4-Dioxan und Tetrahydrofuran (THF).

Beispiele für acyclische Acetale und Ketale (e) sind 1,1-Dimethoxyethan und 1,1-Diethoxyethan.

Beispiele für cyclische Acetale und Ketale (e) sind 1,3-Dioxolan und 1,3-Dioxan.

Beispiele für Orthocarbonsäureester (f) sind Orthomeisensäure-tri-$C_1$-$C_4$-alkylester, insbesondere Orthoameisensäuretrimethylester und Orthoameisensäuretriethylester.

Beispiele für Carbonsäureester (g) sind Essigsäureethylester und Buttersäuremethylester, weiterhin Dicarbonsäurester, beispielsweise Malonsäuredimethylester. Ein Beispiel für einen cyclischen Carbonsäureester (Lacton) ist $\gamma$-Butyrolacton.

In einer speziellen Ausführungsform der vorliegenden Erfindung enthält erfindungsgemäße Mischung nichtcyclische organische Carbonat(e) und cyclische organische Carbonat(e) in einem Gewichtsverhältnis von 1 : 10 bis 10 : 1, bevorzugt 3 : 1 bis 1 : 1.

Erfindungsgemäße Mischung enthält weiterhin

(B) mindestens eine Verbindung der allgemeinen Formel (I a), (I b), (II a) oder (II b),

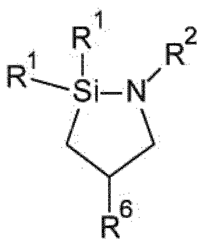 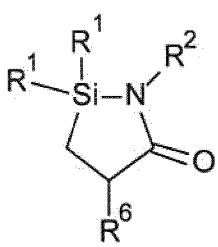

(I a) (I b)

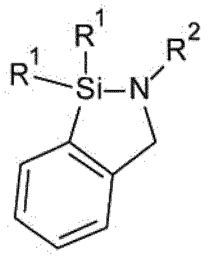

(II a)

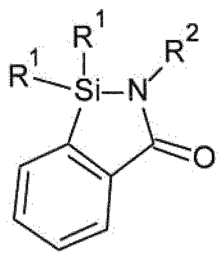

(II b)

kurz auch Verbindung (B) genannt,
wobei die Variablen wie folgt definiert sind:

$R^1$ verschieden oder gleich und gewählt aus $C_3$-$C_{10}$-Cycloalkyl, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
Benzyl,
$C_6$-$C_{14}$-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
jeweils unsubstituiert oder ein- oder mehrfach substituiert mit $C_1$-$C_4$-Alkyl, insbesondere Methyl oder Isopropyl, oder mit Benzyl oder Phenyl,

$R^3$, $R^4$ verschieden oder vorzugsweise gleich und gewählt aus
$C_1$-$C_{10}$-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl, ganz besonders bevorzugt Methyl,
$C_3$-$C_{10}$-Cycloalkyl, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
Benzyl,
$C_6$-$C_{14}$-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
jeweils unsubstituiert oder ein- oder mehrfach substituiert mit $C_1$-$C_4$-Alkyl, insbesondere Methyl oder Isopropyl, oder mit Benzyl oder Phenyl,
und insbesondere Wasserstoff,

oder >$C(R^3)_2$ ist eine >C=O-Gruppe.

Beispiele für bevorzugte >$C(R^3)_2$ sind weiterhin $CHC_6H_5$, $CH(CH_3)$, $C(CH_3)_2$ und insbesondere $CH_2$.
Bevorzugt sind $R^3$ und $R^4$ jeweils paarweise gleich und gewählt aus Wasserstoff und Methyl.

X verschieden oder gleich und gewählt aus Sauerstoff, Schwefel, N-$R^5$ und $C(R^6)_2$, wobei

$R^5$ ist gewählt aus
$C_1$-$C_{10}$-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl, ganz besonders bevorzugt Methyl,
$C_3$-$C_{10}$-Cycloalkyl, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
Benzyl und
$C_6$-$C_{14}$-Aryl, jeweils unsubstituiert oder ein- oder mehrfach substituiert mit $C_1$-$C_4$-Alkyl, insbesondere Methyl oder Isopropyl, oder mit Benzyl oder Phenyl,

$R^6$ gleich oder vorzugsweise verschieden und gewählt aus
Wasserstoff und
$C_1$-$C_{10}$-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl, ganz besonders bevorzugt Methyl,
$C_3$-$C_{10}$-Cycloalkyl, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
Benzyl und
$C_6$-$C_{14}$-Aryl, jeweils unsubstituiert oder ein- oder mehrfach substituiert mit $C_1$-$C_4$-Alkyl, insbesondere Methyl oder Isopropyl, oder mit Benzyl oder Phenyl,
jeweils unsubstituiert oder ein- oder mehrfach substituiert mit $C_1$-$C_4$-Alkyl, Benzyl oder Phenyl,

$R^7$ gewählt aus $C_1$-$C_4$-Alkyl, wie Methyl, Ethyl, n-Propyl, iso-Propyl, n-Butyl, iso-Butyl, sec.-Butyl und tert.-Butyl, ganz besonders bevorzugt Methyl, Ethyl und Iso-Propyl,

n eine ganze Zahl im Bereich von 1 bis 3, vorzugsweise 1 oder 2 und insbesondere 1.

Besonders bevorzugt ist X gewählt aus $CHCH_3$ und $CH(CH_2CH_3)$.
Wenn in Verbindungen der Formel (II) n = 1 gewählt wird, so entspricht sie der allgemeinen Formel (II')

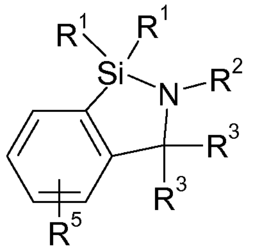

(II')
(II) mit n = 1

und eine Gruppe X im eigentlichen Sinne ist nicht anwesend.
In einer bevorzugten Ausführungsform der vorliegenden Erfindung wählt man Verbindung (B) aus Verbindungen der allgemeinen Formeln (I a), (I b), (II a) und (II b),

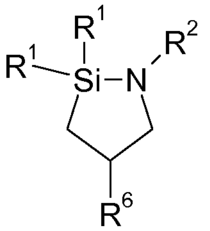

(I a)

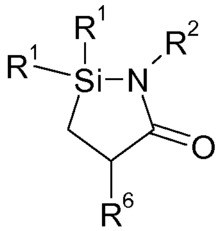

(I b)

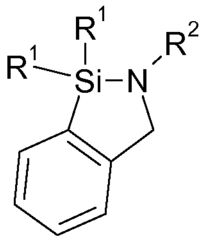

(II a)

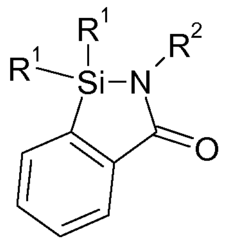

(II b)

$R^1$ verschieden oder gleich und gewählt aus $C_1$-$C_4$-Alkyl, wie Methyl, Ethyl, n-Propyl, iso-Propyl, n-Butyl, iso-Butyl, sec.-Butyl und tert.-Butyl, ganz besonders bevorzugt Methyl, $C_1$-$C_4$-Alkoxy, wie Ethoxy, n-Propoxy, iso-Propoxy, n-Butoxy und insbesondere Methoxy, und Phenyl,

$R^2$ gewählt aus $C_1$-$C_4$-Alkyl, wie Methyl, Ethyl, n-Propyl, iso-Propyl, n-Butyl, iso-Butyl, sec.-Butyl und tert.-Butyl, ganz besonders bevorzugt Methyl und tert.-Butyl, $COOCH_3$, $COOC_2H_5$, $C_2$-$C_3$-Alkenyl, beispielsweise $-CH{=}CH_2$, $-CH_2$-$CH{=}CH_2$, *(E)*-$CH{=}CH$-$CH_3$ und *(Z)*-$-CH{=}CH$-$CH_3$,
und Phenyl

$R^6$ gleich oder vorzugsweise verschieden und gewählt aus Wasserstoff und Methyl.

In einer bevorzugten Ausführungsform der vorliegenden Erfindung wählt man Verbindung (B) aus den folgenden Verbindungen

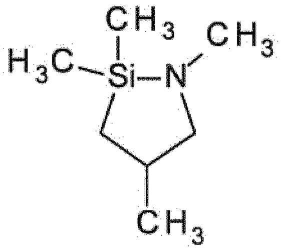

(I a.1)

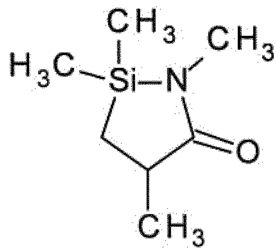

(I b.1)

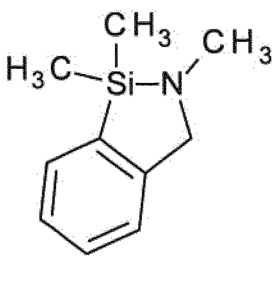

(II a.1)

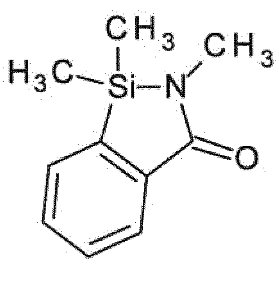

(II b.1)

Erfindungsgemäße Mischung enthält weiterhin

(C) im Bereich von null bis 30 ppm Wasser, bevorzugt 3 bis 25 ppm, besonders bevorzugt mindestens 5 ppm. Dabei werden unter ppm Gew.-ppm (parts per million) verstanden, bezogen auf gesamte erfindungsgemäße Mischung.

Die Anteile an Wasser (C) lassen sich durch verschiedene, an sich bekannte Methoden bestimmen. Besonders

gut geeignet ist die Karl-Fischer-Titration, beispielsweise nach DIN 51777 oder ISO760: 1978. Unter "null ppm Wasser" soll dabei verstanden werden, dass die Wassermengen unterhalb der Nachweisgrenze liegen.

Erfindungsgemäße Mischung kann weiterhin mindestens ein Additiv enthalten, kurz auch Additiv (D) genannt. Additive (D) können beispielsweise sein: aromatische Verbindungen, Sultone, cyclische exo-Methylencarbonate, Lithiumbisoxalatoborat (LiBOB) und Lithium(difluoroxalato)-borat (LiDFOB).

Als Beispiele für als Additiv (D) geeignete aromatische Verbindungen sind Biphenyl, Cyclohexylbenzol und 1,4-Dimethoxybenzol zu nennen.

Sultone können unsubstituiert oder substituiert sein. Als Beispiele für als geeignete Sultone sind Butansulton und Propylensulton (Propansulton), Formel (III),

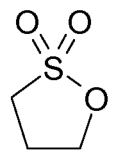

(III)

und insbesondere Sultone mit mindestens einer C-C-Doppelbindung pro Molekül zu nennen. Ein Beispiel für substituierte Sultone ist 1-Phenyl-1,3-Butansulton.

Als Beispiele für als Additiv (D) geeignete exo-Methylen-Ethylencarbonate sind insbesondere Verbindungen der allgemeinen Formel (IV) zu nennen.

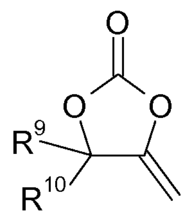

(IV)

in denen $R^9$ und $R^{10}$ verschieden sein können oder gleich und gewählt aus $C_1$-$C_{10}$-Alkyl und Wasserstoff. In einer bevorzugten Ausführungsform sind $R^9$ und $R^{10}$ jeweils gleich Methyl. In einer anderen bevorzugten Ausführungsform der vorliegenden Erfindung sind $R^9$ und $R^{10}$ jeweils gleich Wasserstoff.

Weiterhin können Additive (D) acyclische oder acyclische Alkane sein, die bevorzugt als Reinstoffe und bei einem Druck von 1 bar einen Siedepunkt von mindestens 36°C aufweisen. Beispiele sind Cyclohexan, Cycloheptan und Cyclododekan. Weiterhin kommen organische Ester anorganischer Säuren, zum Beispiel Methylester oder Ethylester der Phosphorsäure oder Schwefelsäure, in Betracht.

Erfindungsgemäße Mischung kann weiterhin mindestens ein Lithiumsalz (E) enthalten. Bei Lithiumsalzen (E) handelt es sich vorzugsweise um Salze von einwertigen Anionen. Beispiele für geeignete Lithiumsalze (E) sind $LiPF_6$, $LiBF_4$. $LiClO_4$, $LiAsF_6$, $LiCF_3SO_3$, $LiC(C_xF_{2x+1}SO_2)_3$, Lithiumbisoxalatoborat (LIBOB), Lithiumdifluorbisoxalatoborat (LDFOB), Lithiumimide wie $LiN(C_xF_{2x+1}SO_2)_2$, wobei x eine ganze Zahl im Bereich von 1 bis 20 ist, $LiN(SO_2F)_2$, $Li_2SiF_6$, $LiSbF_6$, $LiAlCl_4$, und Salze der allgemeinen Formel $(C_xF2_{x+1}SO_2)_mXLi$, wobei x wie oben und m wie folgt definiert ist:

m = 1, wenn X gewählt wird aus Sauerstoff und Schwefel,
m = 2, wenn X gewählt wird aus Stickstoff und Phosphor, und
m = 3, wenn X gewählt wird aus Kohlenstoff und Silizium.

Besonders bevorzugte Lithiumsalze (E) sind gewählt aus $LiPF_6$, $LiBF_4$, $LiSbF_6$, LiBOB, LDFOB und $LiPF_3(CF_2CF_3)_3$ (LiFAP).

Vorzugsweise enthält erfindungsgemäße Mischung mindestens ein Lithiumsalz (E).

In einer Ausführungsform der vorliegenden Erfindung enthält erfindungsgemäße Mischung über Lösungsmittel (A), Verbindung (B), Wasser (C), gegebenenfalls Additiv (D) und gegebenenfalls Lithiumsalz (E) hinaus keine weiteren Komponenten.

In einer Ausführungsform der vorliegenden Erfindung weist erfindungsgemäße Mischung folgende Zusammensetzung auf:

(A) insgesamt im Bereich von 50 bis 99,5 Gew.-%, bevorzugt 60 bis 95 Gew.-%, besonders bevorzugt 70 bis 90 Gew.-% aprotisches organisches Lösungsmittel oder Mischung von aprotischen organischen Lösungsmitteln, das oder die bei Zimmertemperatur flüssig ist,

(B) im Bereich von 0,01 bis 5 Gew.-%, bevorzugt 0,08 bis 3 Gew.-%, besonders bevorzugt 0,15 bis 2 Gew.-% Verbindung der allgemeinen Formel (I a), (I b), (II a) oder (II b),
(C) null bis 50 ppm, bevorzugt 3 bis 25 ppm und besonders bevorzugt mindestens 5 ppm Wasser,
(D) insgesamt null bis insgesamt 10 Gew.-%, bevorzugt 0,01 bis 5 Gew.-%, besonders bevorzugt 0,4 bis 2 Gew.-% Additiv(e),
(E) null bis 25 Gew.-%, bevorzugt 5 bis 18 Gew.-% Lithiumsalz,

wobei Angaben in Gew.-% bzw. ppm jeweils auf gesamte Mischung bezogen sind.

Erfindungsgemäße Mischungen lassen sich sehr gut als Elektrolyten in Lithium-Ionen-Batterien einsetzen. Man erhält Lithium-Ionen-Batterien mit sehr guten Gebrauchseigenschaften, beispielsweise sehr guter Zyklisierbarkeit auch nach längerer Betriebsdauer. Ein weiterer Gegenstand der vorliegenden Erfindung sind daher Lithium-Ionen-Batterien, enthaltend mindestens ein erfindungsgemäße Mischung. Ein weiterer Gegenstand der vorliegenden Erfindung ist die Verwendung von erfindungsgemäßen Mischungen in Lithium-Ionen-Batterien. Ein weiterer Gegenstand der vorliegenden Erfindung ist ein Verfahren zur Herstellung von Lithium-Ionen-Batterien unter Verwendung von mindestens einer erfindungsgemäßen Mischung.

Dabei sollen unter Lithium-Ionen-Batterien alle solche Batterien verstanden werden, in denen Lithiumionen als Ladungsträger den Ladungstransport bewerkstelligen. Beispielhaft seien solche Batterien genannt, die mindestens eine Kathode aufweisen, die ein Lithium-haltiges Übergangsmetallmischoxid mit Schichtstruktur, ein lithiiertes Übergangsmetallmischoxid mit Spinellstruktur oder ein lithiiertes Übergangsmetallphosphat mit Olivinstruktur, beispielsweise $LiFePO_4$ und $LiMnPO_4$, enthalten. Geeignete Übergangsmetallmischoxide mit Schichtstruktur sind $LiMnO_2$, $LiCoO_2$, $LiNiO_2$ und insbesondere solche der allgemeinen Formel

$$Li_{(1-y)}[Ni_aCo_bMn_c]_{(1-y)}O_2$$

wobei y gewählt ist aus null bis 0,3, bevorzugt 0,05 bis 0,2,
a, b und c jeweils gleich, verschieden oder paarweise gleich sein können und im Bereich von 0,1 bis 0,8 liegen, wobei gilt:

$$a + b + c = 1$$

Geeignete Übergangsmetallmischoxide mit Spinellstruktur sind insbesondere solche der allgemeinen Formel (V)

$$Li_{1+t}M_{2-t}O_{4-d} \qquad (V)$$

wobei d im Bereich von null bis 0,4 liegt,
wobei t im Bereich von null bis 0,4 liegt, und
wobei M gewählt wird aus einem oder mehreren Metalle der Gruppen 3 bis 12 des Periodensystems der Elemente, beispielsweise Ti, V, Cr, Mn, Fe, Co, Ni, Zn, Mo, bevorzugt sind Mn, Co und Ni, und insbesondere aus Kombinationen von Ni und Mn.

In einer Ausführungsform der vorliegenden Erfindung enthält mindestens eine Kathode von erfindungsgemäßer Batterie ein kathodisches Aktivmaterial mit einem Mangangehalt im Bereich von 50 bis 10 Gew.-%, bevorzugt 50 bis 80 Gew.-%, bezogen auf Gehalt an Übergangsmetallen.

In einer Ausführungsform der vorliegenden Erfindung enthält mindestens eine Anode von erfindungsgemäßer Batterie Kohlenstoff in einer elektrisch leitfähigen Modifikation, beispielsweise Ruß, sogenannter Hard Carbon, also graphit-ähnlicher Kohlenstoff mit größeren amorphen Bereichen als Graphit sie aufweist, oder vorzugsweise Graphit.

Zur erfindungsgemäßen Verwendung von erfindungsgemäßen Mischungen in Lithium-Ionen-Batterien ist es nicht unbedingt erforderlich, dass erfindungsgemäße Mischung und insbesondere Verbindung der allgemeinen Formel (I a), (I b), (II a) oder (II b) über die gesamte Lebensdauer der betreffenden Lithium-Ionen-Batterie in der Lithium-Ionen-Batterie vorhanden ist. Verbindung der allgemeinen Formel (I a) oder (I b) kann an Menge abnehmen oder komplett verbraucht werden.

In einer Ausführungsform der vorliegenden Erfindung setzt man eine Batterie ein, die erfindungsgemäße Mischung aufweist, die nur wenig, beispielsweise 0,01 bis 0,3 Gew.-% Verbindung der allgemeinen Formel (I a), (I b), (II a) oder (II b) aufweist. Diese reagiert mit Wasserspuren, beispielsweise mit Wasserspuren, die aus dem Elektrodenmaterial oder aus einzelnen der Lösungsmittel stammen, beispielsweise unter Bildung eines Polymerfilms oder unter Bildung von anderen, nicht-flüchtigen Zersetzungsprodukten. Weiterhin kann Verbindung der allgemeinen Formel (I a), (I b), (II a) oder (II b) mit HF-Spuren reagieren.

Kathoden auf Basis von Übergangsmetall-Mischoxid können weiterhin beispielsweise Kohlenstoff in elektrisch leitfähiger Modifikation aufweisen, beispielsweise als Ruß, Graphit, Graphene oder als Kohlenstoff-Nanoröhren.
Kathoden in erfindungsgemäßen Batterien können beispielsweise weiterhin ein Bindemittel enthalten, beispielsweise ein polymeres Bindemittel. Besonders geeignete polymere Bindemittel sind Polyvinylidenfluorid (PVdF), Polytetrafluorethylen, Copolymere von Tetrafluorethylen und Hexafluorpropylen, Copolymere von Tetrafluorethylen und Vinylidenfluorid und Polyacrylnitril.
Erfindungsgemäße Lithium-Ionen-Batterien können weiterhin eine Anode aus an sich bekannten Materialien enthalten, vorzugsweise im wesentlich aus Graphit sein. Erfindungsgemäße Lithium-Ionen-Batterien können weiterhin an sich übliche Bestandteile umfassen, beispielsweise einen oder mehrere Separatoren, eine oder mehrere Ableitplättchen (Stromableiter) und ein Gehäuse.
Ein weiterer Gegenstand der vorliegenden Erfindung ist ein Verfahren zur Herstellung von erfindungsgemäßen Mischungen, kurz auch erfindungsgemäßes Herstellungsverfahren genannt. Das erfindungsgemäße Herstellungsverfahren ist dadurch gekennzeichnet, dass man die folgenden Schritte ausführt

(α) man stellt mindestens ein aprotisches organisches Lösungsmittel (A) bereit, kurz Schritt (α) genannt,
(β) gegebenenfalls vermischt man mit mindestens einem weiteren aprotischen organischen Lösungsmittel (A), kurz auch Schritt (β) genannt, und zwar so, dass man eine bei Normalbedingungen flüssige Mischung erhält,
(γ) gegebenenfalls vermischt man mit einem oder mehreren Additiven (D), kurz Schritt (γ) genannt,
(δ) man trocknet, kurz Schritt (δ) genannt, und
(ε) man vermischt mit Verbindung der allgemeinen Formel (I a) oder (I b) oder (II a) oder (II b) und gegebenenfalls mit mindestens einem Additiv (D) und gegebenenfalls mit mindestens einem Lithiumsalz (E), kurz Schritt (ε) genannt.

Dabei kann man die Schritte (α) bis (ε) in der vorstehend genannten Reihenfolge durchführen oder in einer anderen Reihenfolge. So ist es beispielsweise möglich, sich im Wesentlichen an die vorstehend genannte Reihenfolge der Schritte (α) bis (ε) zu halten, aber Schritt (δ) unmittelbar vor Schritt (γ) durchführt.
In einer anderen Variante geht man so vor, dass man sich im Wesentlichen an die vorstehend genannte Reihenfolge der Schritte (α) bis (ε) hält, aber Schritt (γ) unmittelbar vor Schritt (β) durchführt.
Lösungsmittel (A), Additive (D), Verbindung der allgemeinen Formel (I a), (I b), (II a) und (II b) und Lithiumsalze (E) sind vorstehend definiert.
Die Schritte (α) bis (ε) werden im Folgenden näher beschrieben.
Das Vermischen der Komponenten (A), (B) und gegebenenfalls (C) kann man bei beliebigen Temperaturen durchführen.

Schritt (α):

Man stellt ein oder mehrere Lösungsmittel (A) bereit. Einzelne Lösungsmittel (A) oder alle Lösungsmittel (A) kann man in getrockneten Zustand bereitstellen, beispielsweise mit einem Wassergehalt von 1 bis 50 ppm, oder mit einem höheren Wassergehalt.

Schritte (β), (γ) und (ε): Vermischungsschritte

In einer Ausführungsform der vorliegenden Erfindung vermischt man jeweils bei Temperaturen im Bereich von 10 bis 100°C, besonders bevorzugt bei Zimmertemperatur.
In einer Ausführungsform der vorliegenden Erfindung vermischt man bei einer Temperatur, die mindestens 1°C über dem Schmelzpunkt des am höchsten schmelzenden Lösungsmittels (A) liegt.
Die Temperaturobergrenze für das Vermischen wird durch die Flüchtigkeit der am leichtesten flüchtigen Lösungsmittels (A) bestimmt. Vorzugsweise vermischt man bei einer Temperatur unterhalb des Siedepunkts der am leichtesten flüchtigen Lösungsmittels (A).
Man kann bei beliebigem Druck vermischen, bevorzugt ist Normaldruck. Die Dauer des Vermischens kann man beispielsweise im Bereich von 5 Minuten bis zu 24 Stunden wählen.
In Schritt (β) wählt man die Mengenverhältnisse von Lösungsmittel(n) (A) so, dass man eine bei Zimmertemperatur flüssige Mischung erhält. Bevorzugt wählt man die Mengenverhältnisse von Lösungsmittel(n) (A) so, dass man eine bei 0°C flüssige Mischung erhält. Besonders bevorzugt wählt man die Mengenverhältnisse von Lösungsmittel(n) (A) so, dass man eine bei -15°C flüssige Mischung erhält. Die Überprüfung, ob die Mischung aus Schritt (β) flüssig ist, kann beispielsweise durch einfache optische Inspektion erfolgen, beispielsweise durch visuelle Inspektion.
Beispielsweise kann man durch Zugabe von Diethylcarbonat oder Methylethylcarbonat den Schmelzpunkt einer Mischung senken.
Das Vermischen erfolgt vorzugsweise unter wasserfreien Bedingungen, also unter Luft- und insbesondere

unter Feuchtigkeitsausschluss, beispielsweise unter trockener Luft. Bevorzugt erfolgt das Vermischen unter Luftausschluss (Inertbedingungen), beispielsweise unter trockenem Stickstoff oder trockenem Edelgas.

Schritt (δ):

In Schritt (δ) trocknet man. Man kann nach oder vorzugsweise vor Zugabe von Verbindung der allgemeinen Formel (I a), (I b), (II a) oder (II b), gegebenenfalls von Additiv(en) (D) und gegebenenfalls von Lithiumsalz(en) (E) trocknen.

Das Trocknen kann nach an sich üblichen Methoden über einem Trockenmittel erfolgen, bevorzugt trocknet man über Molekularsieb. Molekularsiebe werden vorzugsweise aus natürlichen und synthetischen Zeolithen gewählt, die in Form von Kugeln (Perlen), als Pulver oder Stäbchen vorliegen können. Bevorzugt setzt man Molekularsieb 4Å, besonders bevorzugt Molekularsieb 3Å ein.

Das eigentliche Trocknen kann man beispielsweise durch Rühren über dem oder den Trockenmitteln durchführen.

Vorzugsweise lässt man Malekularsieb auf Lösungsmittel (A) in Abwesenheit von chemischen Trocknungsmitteln einwirken. Unter chemischen Trocknungsmitteln werden im Rahmen der vorliegenden Erfindung stark saure, alkalische oder stark reduzierend wirkende Trocknungsmittel, insbesondere gewählt aus niedermolekularen Verbindungen, Salzen und Elementen verstanden. Bekannte saure Trocknungsmittel sind beispielsweise Aluminiumalkyle wie beispielsweise Trimethylaluminium, weiterhin Phosphorpentoxid und konzentrierte Schwefelsäure. Bekannte basische Trocknungsmittel sind beispielsweise Kaliumcarbonat und $CaH_2$. Bekannte reduzierend wirkende Trocknungsmittel sind beispielsweise elementares Natrium, elementares Kalium und Natrium-Kalium-Legierung.

In einer Ausführungsform der vorliegenden Erfindung führt man Schritt (δ) bei einer Temperatur im Bereich von 15 bis 40°C durch, bevorzugt 20 bis 30°C.

In einer Ausführungsform der vorliegenden Erfindung beträgt die Einwirkzeit in Schritt (δ) einige Minuten, beispielsweise mindestens 5 Minuten, bis mehrere Tage, bevorzugt maximal 24 Stunden, besonders bevorzugt eine bis 6 Stunden.

Während der Durchführung von Schritt (δ) kann man ein- oder mehrmals etwas Lösungsmittelgemisch entnehmen, um den Trocknungsvorgang mittels Karl-Fischer-Titration zu verfolgen.

Es ist bevorzugt, nur wenig zu rühren oder zu schütteln. Zu heftiges Rühren bzw. zu heftiges Schütteln kann zum teilweisen Zerschlagen des Molekularsiebes führen, was zu Problemen beim Abfiltrieren Anlass geben kann.

Anschließend trennt man das oder die Trockenmittel ab, beispielsweise durch Abdestillieren des oder der Lösungsmittel (A) und insbesondere durch Dekantieren oder Filtrieren.

Durch die Durchführung des erfindungsgemäßen Verfahrens erhält man eine erfindungsgemäße Mischung.

Die Erfindung wird durch Arbeitsbeispiele weiter erläutert.

Arbeitsbeispiele

Angaben in % sind stets Gew.-%, wenn nicht ausdrücklich anders angegeben.

Man verwendete stets folgende Elektroden:

Kathode (Kat-1): man verwendete eine Lithium-Nickel-Mangan-Spinell-Elektrode, die wie folgt hergestellt wurden. Man vermischte miteinander:

85 % $LiMn_{1,5}Ni_{0,5}O_4$
6 % PVdF, kommerziell erhältlich als Kynar Flex® 2801 der Arkema Group,
6 % Ruß, BET-Oberfläche von 62 $m^2/g$, kommerziell erhältlich als "Super P Li" der Firma Timcal,
3 % Graphit, kommerziell erhältlich als KS6 der Fa. Timcal;
in einem verschraubbaren Gefäß. Unter Rühren versetzte man mit so viel N-Methylpyrrolidon (NMP), bis man eine zähe klumpenfreie Paste erhalten hatte. Man rührte 16 Stunden.

Dann rakelte man die so erhaltene Paste auf 20 μm dicke Aluminiumfolie auf und trocknete 16 Stunden lang in einem Vakuumtrockenschrank bei 120 °C. Die Dicke der Beschichtung betrug nach dem Trocknen 30 μm. Anschließend stanzte man kreisscheibenförmige Segmente aus, Durchmesser: 12 mm.

Anode (An-1): Man vermischte miteinander

91 % Graphit ConocoPhillips C5
6 % PVdF, kommerziell erhältlich als Kynar Flex® 2801 der Arkema Group,
3 % Ruß, BET-Oberfläche von 62 $m^2/g$, kommerziell erhältlich als "Super P Li" der Firma Timcal In einem verschraubbaren Gefäß. Unter Rühren versetzte man mit so viel NMP, bis man eine zähe klumpenfreie Paste erhalten hatte. Man rührte 16 Stunden.

Dann rakelte man die so erhaltene Paste auf 20 μm dicke Kupferfolie auf und trocknete 16 Stunden lang in einem Vakuumtrockenschrank bei 120 °C. Die Dicke der Beschichtung betrug nach dem Trocknen 35 μm. Anschließend stanzte man kreisscheibenförmige Segmente aus, Durchmesser: 12 mm.

Als Testzelle wurde ein Aufbau gemäß Abbildung 1 verwendet. Beim Zusammenbau der Zelle wurde diese von unten nach oben gemäß der schematischen Abbildung 1 zusammengesetzt. In Abbildung 1 befindet sich die Anodenseite oben, die Kathodenseite unten.

Die Erläuterungen in Abbildung 1 bedeuten:

1,1' Stempel
2, 2' Mutter
3, 3' Dichtungsring -jeweils doppelt, der jeweils zweite, etwas kleinere Dichtungsring ist hier nicht gezeigt
4 Spiralfeder
5 Stromableiter aus Stahl
6 Gehäuse

Auf den Stempel der Kathodenseite 1' wurde Kathode (Kat-1) aufgebracht. Anschließend wurde ein Separator aus Glasfaser, Dicke des Separators: 0,5 mm, auf Kathode (Kat-1) gelegt. Auf den Separator wurde die zu testende Mischung geträufelt. Anode (An-1) wurde auf die getränkten Separatoren gelegt. Als Stromableiter 5 wurde ein Edelstahlplättchen benutzt, welches direkt auf die Anode aufgebracht wurde. Anschließend wurden die Dichtungen 3 und 3' hinzugefügt und die Bestandteile der Testzelle zugeschraubt. Mittels der als Spiralfeder 4 ausgebildeten Stahlfeder und durch den Druck, welcher durch die Verschraubung mit Anodenstempel 1 erzeugt wurde, wurde der elektrische Kontakt gewährleistet.

11.1 Herstellung einer erfindungsgemäßen elektrochemischen Zelle EZ.1 und Testung

Whatman (GF/D) wurde als Separator eingesetzt und dazu in einer Argon-gefüllten Glove-box mit Elektrolyt betropft und zwischen einer Kathode (Kat-1) und einer Anode (An-1) positioniert, so dass sowohl die Anode als auch die Kathode direkten Kontakt zum Separator hatte. Man setzte Elektrolyt E-1 zu und erhielt erfindungsgemäße elektrochemische Zelle EZ.1.

Als Testmischung ("Elektrolyt") E-1 setzte man ein:

1 M $LiPF_6$, gelöst in Ethylencarbonat und Ethylmethylcarbonat im Massenverhältnis 1:1, und 2 Gew.-% Verbindung (I a.1), bezogen auf Summe an $LiPF_6$, Ethylencarbonat und Ethylmethylcarbonat.

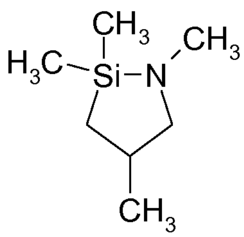

(I a.1)

Dazu wurde eine Mischung von Ethylencarbonat und Ethylmethylcarbonat (1:1, s. o.) über Molekularsieb getrocknet. Dann wurde Verbindung (I a.1) in der Mischung gelöst. Anschließend wurde nochmals über Molekularsieb getrocknet und danach $LiPF_6$ zugesetzt. Man erhielt Testmischung ("Elektrolyt") E-1.

E-1 enthielt 12 ppm Wasser, bestimmt durch Karl-Fischer-Titration nach DIN 51777 bzw. ISO760: 1978 mit coulometrischer Detektion.

Der Versuch wurde wiederholt, aber mit einer Elektrolytlösung, die kein (I a.1) enthielt. Man erhielt elektrochemische Vergleichszelle V-EZ.2.

II. Elektrochemische Charakterisierung der Zelle:

Die elektrochemischen Untersuchungen von EZ.1 und V-EZ.2 erfolgte zwischen 4,25 V und 4,8 V.

Die ersten zwei Zyklen wurden zwecks Formierung bei 0,2C-Rate gefahren; die Zyklen Nr. 3 bis Nr. 50 wurden bei 1C-Rate gezykelt, danach folgten wieder 2 Zyklen mit 0,2C-Rate, gefolgt von 48 Zyklen mit 1C-Rate usw. Das Laden

bzw. Entladen der Zelle wurde mit Hilfe eines "MAC-COR Battery Tester" bei Raumtemperatur durchgeführt. Es konnte gezeigt werden, dass die Batterie-Kapazität über wiederholtes Laden und Entladen sehr stabil blieb.

Die Ergebnisse sind in Abbildung 2 dargestellt.

## Patentansprüche

1. Mischung, enthaltend

   (A) mindestens ein aprotisches organisches Lösungsmittel oder eine Mischung von aprotischen organischen Lösungsmitteln, das oder die bei Zimmertemperatur flüssig ist,
   (B) mindestens eine Verbindung der allgemeinen Formel (I a), (I b), (II a) oder (II b),

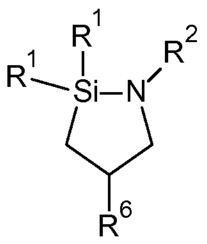

(I a)

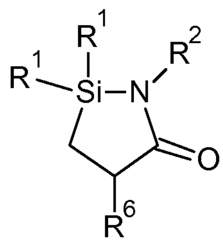

(I b)

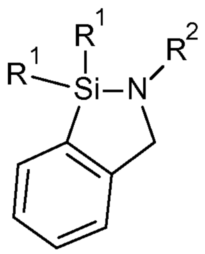

(II a)

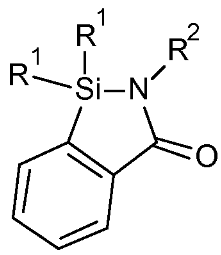

(II b)

   wobei die Variablen wie folgt definiert sind:

   $R^1$ verschieden oder gleich und gewählt aus $C_1$-$C_4$-Alkyl, $C_1$-$C_4$-Alkoxy und Phenyl,
   $R^2$ gewählt aus $C_1$-$C_4$-Alkyl, $COOCH_3$, $COOC_2H_5$, $C_2$-$C_3$-Alkenyl und Phenyl,
   $R^6$ gewählt aus Wasserstoff und Methyl,

   (C) im Bereich von null bis 30 ppm Wasser,
   (D) gegebenenfalls mindestens ein weiteres Additiv,
   (E) gegebenenfalls mindestens ein Lithiumsalz.

2. Mischung nach Anspruch 1, **dadurch gekennzeichnet, dass** man aprotische organische Lösungsmittel (A) wählt aus

   (a) cyclischen und nicht-cyclischen organischen Carbonaten,
   (b) Di-$C_1$-$C_{10}$-alkylethern
   (c) Di-$C_1$-$C_4$-Alkyl-$C_2$-$C_6$-alkylenethern,
   (d) cyclischen Ethern,
   (e) cyclischen und acyclischen Acetalen und Ketalen,
   (f) Orthocarbonsäureestern und
   (g) cyclischen und nicht-cyclischen Carbonsäureestern.

**3.** Mischung nach Anspruch 1 oder 2, **dadurch gekennzeichnet, dass** man Additiv (D) wählt aus Sultonen, cyclischen exo-Methylencarbonaten, Lithiumbisoxalatoborat (LiBOB) und Lithium(difluoroxalato)borat (LiDFOB).

**4.** Mischung nach einem der Ansprüche 1 bis 3, **dadurch gekennzeichnet, dass** man Verbindung der allgemeinen Formel (I a), (I b), (II a) bzw. (II b) wählt aus

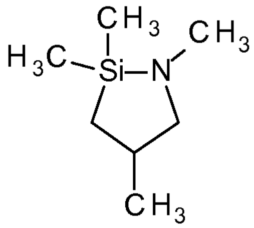

(I a.1)

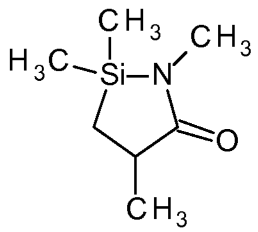

(I b.1)

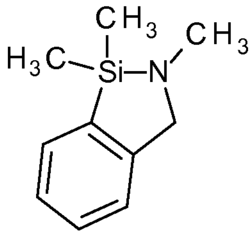

(II a.1)

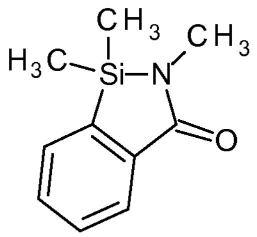

(II b.1)

**5.** Mischung nach einem der Ansprüche 1 bis 4, **dadurch gekennzeichnet, dass** man Lithiumsalz (E) wählt aus $LiPF_6$, $LiBF_4$, $LiSbF_6$, LiBOB, LDFOB und $LiPF_3(CF_2CF_3)_3$ (LiFAP).

**6.** Mischung nach einem der Ansprüche 1 bis 5, **dadurch gekennzeichnet, dass** es folgende Zusammensetzung aufweist:

(A) insgesamt im Bereich von 50 bis 99,5 Gew.-% aprotisches organisches Lösungsmittel oder Gemisch von aprotischen organischen Lösungsmitteln, das bei Zimmertemperatur flüssig ist,
(B) im Bereich von 0,01 bis 4 Gew.-% Verbindung der allgemeinen Formel (Ia. (I b), (II a) oder (II b),
(C) null bis 30 ppm Wasser,
(D) insgesamt null bis insgesamt 10 Gew.-% Additiv(e),
(E) null bis 20 Gew.-% Lithiumsalz,

wobei Angaben in Gew.-% bzw. ppm jeweils auf gesamtes Gemisch bezogen sind.

**7.** Verwendung von Mischungen nach einem der Ansprüche 1 bis 6 in Lithium-Ionen-Batterien.

**8.** Lithium-Ionen-Batterie, enthaltend mindestens eine Mischung nach einem der Ansprüche 1 bis 6.

**9.** Lithium-Ionen-Batterie nach Anspruch 8, enthaltend ein kathodisches Aktivmaterial mit einem Mangangehalt im Bereich von 50 bis 80 Gew.-%, bezogen auf Gehalt an Übergangsmetalle.

**10.** Lithium-Ionen-Batterie nach Anspruch 8 oder 9, enthaltend mindestens eine Anode, die Kohlenstoff in einer elektrisch leitfähigen Modifikation enthält.

**11.** Verfahren zur Herstellung von Mischungen nach einem der Ansprüche 1 bis 6, **dadurch gekennzeichnet, dass** man

($\alpha$) mindestens ein aprotisches Lösungsmittel (A) bereitstellt,
($\beta$) gegebenenfalls mit mindestens einem weiteren aprotischen organischen Lösungsmittel (A) vermischt,

(γ) gegebenenfalls mit einem oder mehreren Additiven (D) vermischt,
(δ) trocknet,
(ε) mit Verbindung der allgemeinen Formel (I a) oder (I b) oder (II a) oder (II b) und gegebenenfalls mit mindestens einem Additiv (D) und gegebenenfalls mit mindestens einem Lithiumsalz (E) vermischt.

**12.** Verfahren nach Anspruch 11, **dadurch gekennzeichnet, dass** man Schritt (δ) unter Verwendung von Molekularsieb durchführt.

## Claims

**1.** A mixture comprising

(A) at least one aprotic organic solvent or a mixure of aprotic organic solvents which is liquid at room temperature,
(B) at least one compound of the general formula (I a), (I b), (II a) or (II b),

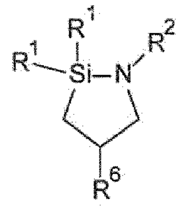

(I a)

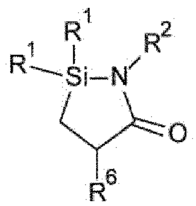

(I b)

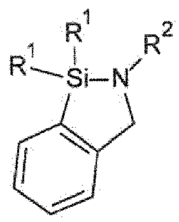

(II a)

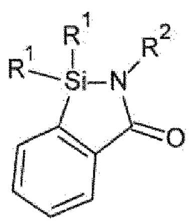

(II b)

where

$R^1$ is the same or different and selected from $C_1$-$C_4$-alkyl, $C_1$-$C_4$-alkoxy and phenyl,
$R^2$ is selected from $C_1$-$C_4$-alkyl, $COOCH_3$, $COOC_2H_5$, $C_2$-$C_3$-alkenyl and phenyl,
$R^6$ is selected from hydrogen and methyl,

(C) from zero to 30 ppm of water,
(D) optionally at least one further additive,
(E) optionally at least one lithium salt.

**2.** The mixture according to claim 1 wherein aprotic organic solvents (A) are selected from

(a) cyclic and noncyclic organic carbonates,
(b) di-$C_1$-$C_{10}$-alkyl ethers,
(c) di-$C_1$-$C_4$-alkyl-$C_2$-$C_6$-alkylene ethers,
(d) cyclic ethers,
(e) cyclic and acyclic acetals and ketals,
(f) orthocarboxylic esters, and
(g) cyclic and noncyclic carboxylic esters.

**3.** The mixture according to claim 1 or 2 wherein additive (D) is selected from sultones, cyclic exo-methylene carbonates,

lithium bisoxalatoborate (LiBOB) and lithium (difluoroxalato)borate (LiDFOB).

**4.** The mixture according to any one of claims 1 to 3 wherein compound of general formula (I a), (I b), (II a) or (II b) is selected from

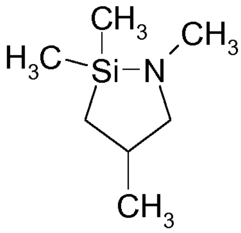

(I a.1)

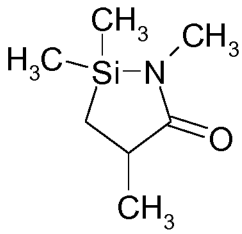

(I b.1)

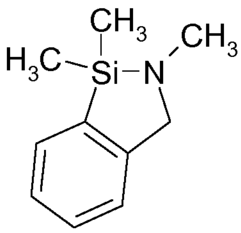

(II a.1)

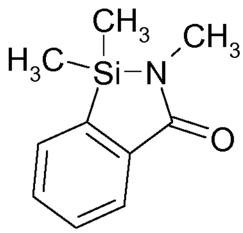

(II b,1)

**5.** The mixture according to any one of claims 1 to 4 wherein lithium salt (E) is selected from $LiPF_6$, $LiBF_4$, $LiSbF_6$, LiBOB, LDFOB and $LiPF_3(CF_2CF_3)_3$ (LiFAP).

**6.** The mixture according to any one of claims 1 to 5 which has the following composition:

(A) altogether from 50 to 99.5 wt% of aprotic organic solvent or of aprotic organic solvent mix which is liquid at room temperature,
(B) from 0.01 to 4 wt% of compound of general formula (I a), (I b), (II a) or (II b),
(C) zero to 30 ppm of water,
(D) altogether zero to altogether 10 wt% of additive(s),
(E) zero to 20 wt% of lithium salt,

wherein recitations in wt% and ppm are each based on total mix.

**7.** The use of mixtures according to any one of claims 1 to 6 in lithium ion batteries.

**8.** A lithium ion battery comprising at least one mixture according to any one of claims 1 to 6.

**9.** The lithium ion battery according to claim 8 comprising a cathodic active material having a manganese content in the range from 50 to 80 wt%, based on transition metal content.

**10.** The lithium ion battery according to claim 8 or 9 comprising at least one anode comprising carbon in an electrically conductive form.

**11.** A process for producing mixtures according to any one of claims 1 to 6 which comprises

($\alpha$) at least one aprotic solvent (A) being provided,
($\beta$) optionally being mixed with at least one further aprotic organic solvent (A),
($\gamma$) optionally being mixed with one or more additives (D),
($\delta$) being dried,

(s) being mixed with compound of general formula (I a) or (I b) or (II a) or (II b) and optionally with at least one additive (D) and optionally with at least one lithium salt (E).

**12.** The process according to claim 11 wherein step (δ) is effected using molecular sieves.

## Revendications

**1.** Mélange, contenant :

(A) au moins un solvant organique aprotique ou un mélange de solvants organiques aprotiques, qui est ou sont liquides à température ambiante,
(B) au moins un composé de formule générale (Ia), (Ib), (IIa) ou (IIb)

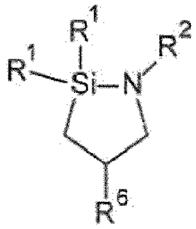

(I a)

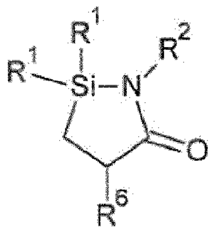

(I b)

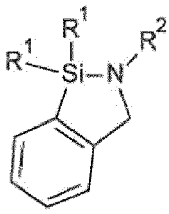

(II a)

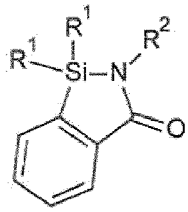

(II b)

dans lesquelles les variables sont définies de la manière suivante :

les $R^1$ sont identiques ou différents, et choisis parmi alkyle en $C_1$-$C_4$, alcoxy en $C_1$-$C_4$ et phényle,
$R^2$ est choisi parmi alkyle en $C_1$-$C_4$, $COOCH_3$, $COOC_2H_5$, alcényle en $C_2$-$C_3$ et phényle,
$R^6$ est choisi parmi hydrogène et méthyle,

(C) dans la plage allant de zéro à 30 ppm d'eau,
(D) éventuellement au moins un additif supplémentaire,
(E) éventuellement au moins un sel de lithium.

**2.** Mélange selon la revendication 1, **caractérisé en ce que** les solvants organiques aprotiques (A) sont choisis parmi

(a) les carbonates organiques cycliques et non cycliques,
(b) les éthers de di-alkyle en $C_1$-$C_{10}$,
(c) les éthers de di-alkyle en $C_1$-$C_4$-alkylène en $C_2$-$C_6$,
(d) les éthers cycliques,
(e) les acétals et cétals cycliques et acycliques,
(f) les esters d'acides orthocarboxyliques et
(g) les esters d'acides carboxyliques cycliques et non cycliques.

**3.** Mélange selon la revendication 1 ou 2, **caractérisé en ce que** l'additif (D) est choisi parmi les sulfones, les carbonates

d'exo-méthylène cycliques, le bisoxalatoborate de lithium (LiBOB) et le (difluoroxalato)borate de lithium (LiDFOB).

**4.** Mélange selon l'une quelconque des revendications 1 à 3, **caractérisé en ce que** le composé de formule générale (Ia), (Ib), (IIa) ou (IIb) est choisi parmi

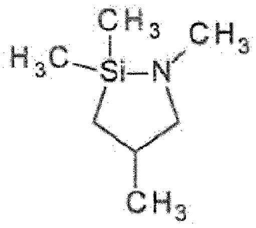

(I a.1)

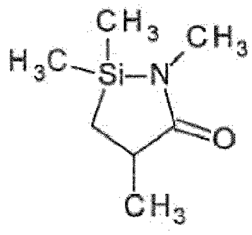

(I b.1)

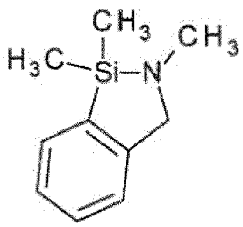

(II a.1)

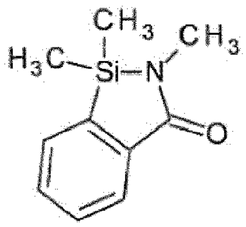

(II b.1)

**5.** Mélange selon l'une quelconque des revendications 1 à 4, **caractérisé en ce que** le sel de lithium (E) est choisi parmi $LiPF_6$, $LiBF_4$, $LiSbF_6$, LiBOB, LDFOB et $LiPF_3(CF_2CF_3)_3$(LiFAP).

**6.** Mélange selon l'une quelconque des revendications 1 à 5, **caractérisé en ce qu'**il présente la composition suivante :

(A) au total dans la plage allant de 50 à 99,5 % en poids d'un solvant organique aprotique ou d'un mélange de solvants organiques aprotiques, qui est liquide à température ambiante,
(B) dans la plage allant de 0,01 à 4 % en poids d'un composé de formule générale (Ia), (Ib), (IIa) ou (IIb),
(C) zéro à 30 ppm d'eau,
(D) au total zéro à au total 10 % en poids d'un ou de plusieurs additifs,
(E) zéro à 20 % en poids de sel de lithium,

les données en % en poids ou ppm se rapportant à chaque fois au mélange total.

**7.** Utilisation de mélanges selon l'une quelconque des revendications 1 à 6 dans des batteries lithium-ion.

**8.** Batterie lithium-ion, contenant au moins un mélange selon l'une quelconque des revendications 1 à 6.

**9.** Batterie lithium-ion selon la revendication 8, contenant un matériau actif cathodique ayant une teneur en manganèse dans la plage allant de 50 à 80 % en poids, par rapport à la teneur en métaux de transition.

**10.** Batterie lithium-ion selon la revendication 8 ou 9, contenant au moins une anode qui contient du carbone sous une forme électriquement conductrice.

**11.** Procédé de fabrication de mélanges selon l'une quelconque des revendications 1 à 6, **caractérisé en ce que**

(α) au moins un solvant aprotique (A) est mis à disposition,
(β) éventuellement mélangé avec au moins un autre solvant organique aprotique (A),
(γ) éventuellement mélangé avec un ou plusieurs additifs (D),
(δ) séché,
(ε) mélangé avec un composé de formule générale (Ia) ou (Ib) ou (IIa) ou (IIb) et éventuellement avec au moins

un additif (D) et éventuellement avec au moins un sel de lithium (E).

**12.** Procédé selon la revendication 11, **caractérisé en ce que** l'étape (δ) est réalisée en utilisant un tamis moléculaire.

Abbildung 1: schematischer Aufbau einer auseinandergenommenen elektrochemischen Zelle zum Testen von erfindungsgemäßen Mischungen

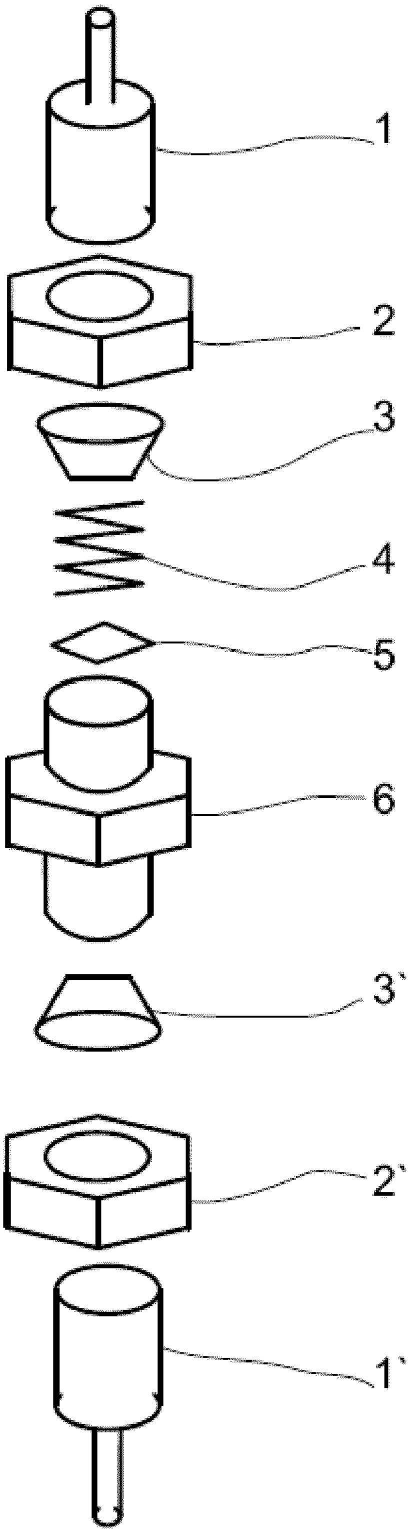

Abbildung 2: Kapazität vs. Zyklenzahl für EZ.1 (Kurve b) und V-EZ.2 (Kurve a)

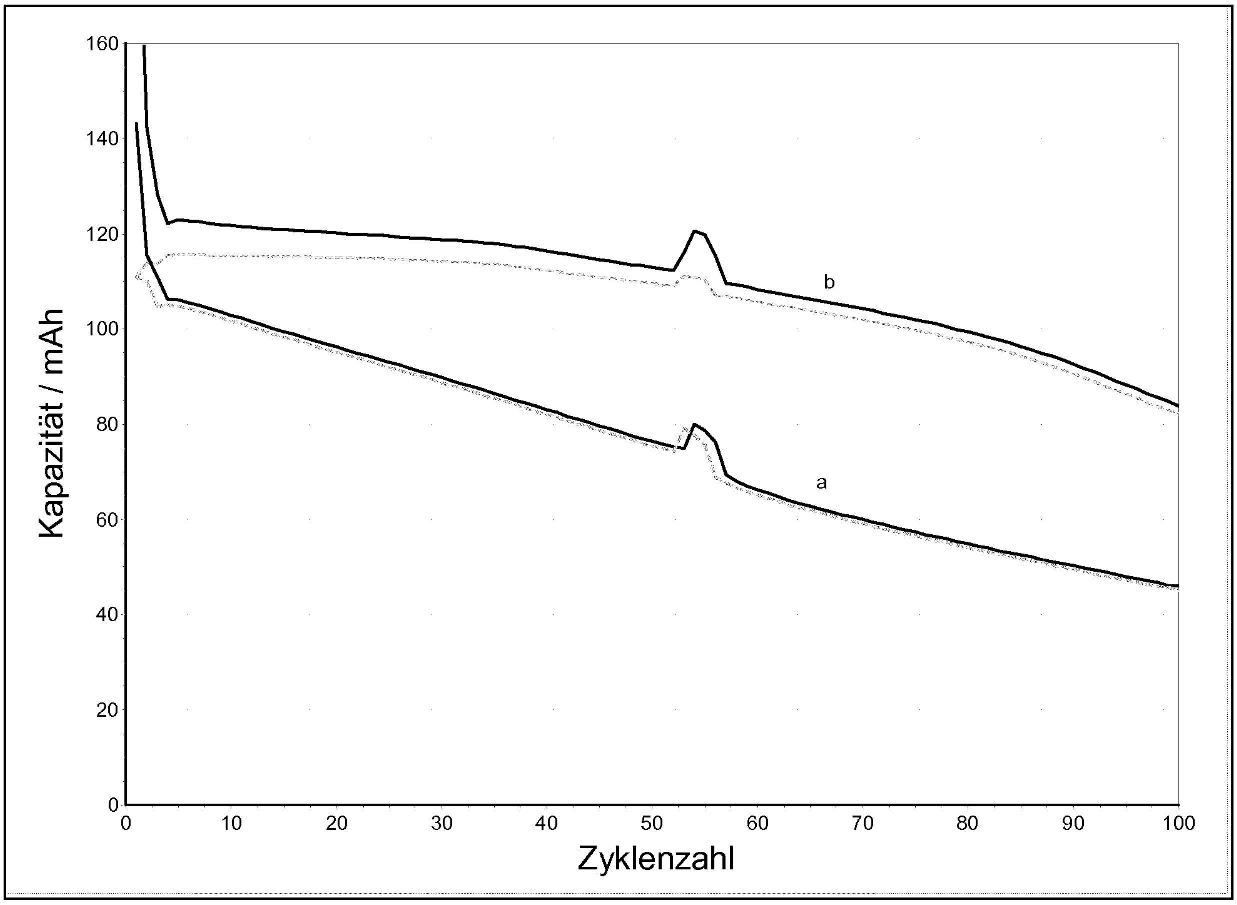

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2007049888 A
- US 6235431 B